# EUROPEAN PATENT SPECIFICATION

(11) **EP 2 020 069 B1**
(45) Date of publication and mention of the grant of the patent: **27.07.2011**
(21) Application number: 07715827.7
(22) Date of filing: 26.03.2007
(51) Int. Cl.: H02H 3/33

(54) **AN EARTH LEAKAGE PROTECTION DEVICE WITH TIME ALERT FEATURE**
ERDLECKSCHUTZEINRICHTUNG MIT ZEITWARNMERKMAL
DISPOSITIF DE SÉCURITÉ CONTRE FUITE À LA TERRE À ALARME TEMPORISÉE

(30) Priority: 26.04.2006 MY 0601906
(43) Date of publication of application: 04.02.2009
(73) Proprietor: Fong, See Ni, Kuala Lumpur, 52200 (MY)
(72) Inventor: Fong, See Ni, Kuala Lumpur, 52200 (MY)
(74) Representative: Chaillot, Geneviève
(86) International application number: PCT/MY2007/000016
(87) International publication number: WO 2007/123389

(56) References cited:
- EP-A- 0 641 055
- EP-A- 0 788 209
- EP-A1- 0 665 623
- US-B1- 6 437 700

## Description

### Background of the Invention

Earth leakage protection devices such as a RCDs (residual current devices) or GFCIs (ground fault circuit interrupters) or ELCB (earth leakage circuit breakers) are electrical devices installed to give protection against electrocution and can reduce the risk of fire arising from insulation failure in the electrical installation. For instance, earth leakage protection devices of the current operated type typically operate with a residual current in the order of 30 mA to 100 mA and this level of protection can never be equaled by circuit breakers or fuses alone. A malfunctioning earth leakage protection device would not serve its intended function and would not give protection against electrocution and the risks associated with insulation failure. It is therefore important to be able to perform non-destructive tests on earth leakage protection devices on a regular basis to ensure that malfunctioning earth leakage protection devices are detected and replaced before something undesired happen. For this purpose, each earth leakage protection device is provided with a test button to check the electromechanical integrity of the earth leakage protection device. As a caution to the users of earth leakage protection devices, on most earth leakage protection devices a label instructs the user to check the function of the earth leakage protection device at regular intervals and to observe that the earth leakage protection device trips instantly. Indeed, it is a requirement under Regulation 514-12-02 of IEE Wiring Regulation to include such a label in indelible characters on an earth leakage protection device so as to remind user to perform integrity test on the earth leakage protection device quarterly, while UL recommends testing the earth leakage protection devices once a month to verify they are working properly. In practice, most users do not bother to perform such check on the electromechanical integrity of the earth leakage protection devices, such as the integrity of the sensing circuit and the trip mechanism, mostly because the users are not aware of the needs and importance of such integrity tests. As a result, a malfunctioning earth leakage protection device may go undetected until a tragedy or loss of property happens.

It is therefore useful to have a built-in feature in an earth leakage protection device where the users are reminded periodically to perform integrity tests on the earth leakage protection devices. An example of such device is disclosed in EP 0 665 623. This invention relates to an earth leakage protection device that provides an audible and/or visual alert to remind the user of the earth leakage protection device to perform integrity test on the earth leakage protection device at a preset time interval. If an earth leakage protection device fails the integrity test, the user detects that the earth leakage protection device needs to be replaced. Through such reminders at preset time intervals to perform integrity tests, the loss of life or property due to malfunctioning earth leakage protection device could be minimised.

### SUMMARY OF INVENTION

According to one aspect of this invention, it is provided an earth leakage protection device with built-in time alert feature comprising an earth leakage protection device with a test switch electrically connected at one end, through a current limiting device, to the live line on the load side of the earth leakage protection device and at the other end to the neutral at the supply side of the earth leakage protection device with the test switch used to simulate an earth leakage condition when the said test switch is pressed, a time alert module comprising a microprocessor system with a CPU, memory, an alert trigger timer and an I/O interface (input/output interface), at least one annunciator electrically connected to the I/O interface of the microprocessor system, the annunciator being triggered at a preset time interval set in the said alert trigger timer of the microprocessor system to alert a user to perform an integrity test on the earth leakage protection device on the time-out of the alert trigger timer, a test detection means to enable the microprocessor system determines that the user has performed an integrity test on the earth leakage protection device, a trip detection means connected to the output terminals of the earth leakage protection device to detect tripping of the earth leakage protection device and a power supply unit connected to the input terminals of the earth leakage protection device, providing power to the time alert module and wherein when the microprocessor system detects the user performing a test, the alert trigger timer resets only if the said trip detection means detects the tripping of electricity supply confirming successful integrity test on the earth leakage protection device.

According to one aspect of this invention, it is provided an earth leakage protection device with built-in time alert feature comprising an earth leakage protection device with a test switch electrically connected at one end, through a current limiting device, to the live line on the load side of the earth leakage protection device and at the other end to the neutral at the supply side of the earth leakage protection device with the test switch used to simulate an earth leakage condition when the said test switch is pressed, a time alert module comprising a microprocessor system with a CPU, memory, an alert trigger timer, a trip time timer and an I/O interface (input/output interface), at least one annunciator electrically connected to the I/O interface of the microprocessor system, the annunciator being triggered at a preset time interval set in the said alert trigger timer of the microprocessor system to alert a user to perform an integrity test on the earth leakage protection device on the time-out of the alert trigger timer, a test detection means to enable the microprocessor system determines that the user has performed an integrity test on the earth leakage protection device, a trip detection means connected to the output terminals of the earth leakage protection device to detect tripping of the earth leakage protection device and a power supply unit connected to the input terminals of the earth leakage protection device, providing power to the time alert module and wherein when the microprocessor system detects the user performing a test, the alert trigger timer resets only if the said trip detection means detects the tripping of electricity supply confirming successful integrity test on the earth leakage protection device and only if the trip time of the earth leakage protection device, as measured by the trip time timer is within a prescribed tripping time range typically 30 ms to 200 ms, depending on the sensitivity of the earth leakage protection device and the leakage current.

### BRIEF DESCRIPTION OF THE DRAWINGS

The features and usefulness of the invention will be more readily appreciated from the following detailed description when read in conjunction with the accompanying drawings, in which:
Fig. 1 is a block diagram an earth leakage protection device of the residual current type provided with a time alert feature of this invention wherein the test detection means is a test detection switch mechanically interlocked with the test switch.
Fig. 2 is a block diagram an earth leakage protection device of the residual current type provided with a time alert feature of this invention wherein the test detection means is an opto-coupler electrically interlocked to the test switch.
Figs. 3a, 3b, 3c and 3d are some illustrations of the possible configurations of a voltage sensor.
Figs. 4a and 4b are some illustration of the possible configurations of a current sensor.
Fig. 5 is a flow chart showing the flow sequence on the operation of the earth leakage protection device with time alert feature of this invention provided with only an alert trigger timer.
Fig. 6 is a flow chart showing the flow sequence on the operation of the earth leakage protection device with time alert feature of this invention provided with both an alert trigger timer and a trip time timer.

### DETAILED DESCRIPTION OF THE INVENTION

The invention will now be described with reference to the accompanying drawings, wherein like reference numerals designate corresponding or identical elements throughout the various drawings.

In accordance with the present invention, a conventional earth leakage protection device (2) such as a RCD (residual current device) or GFCI (ground fault circuit interrupter) or ELCB (earth leakage circuit breaker) is provided with a time alert feature to alert the user of the earth leakage protection device (2) to perform integrity tests on the earth leakage protection device (2) periodically at a preset time.

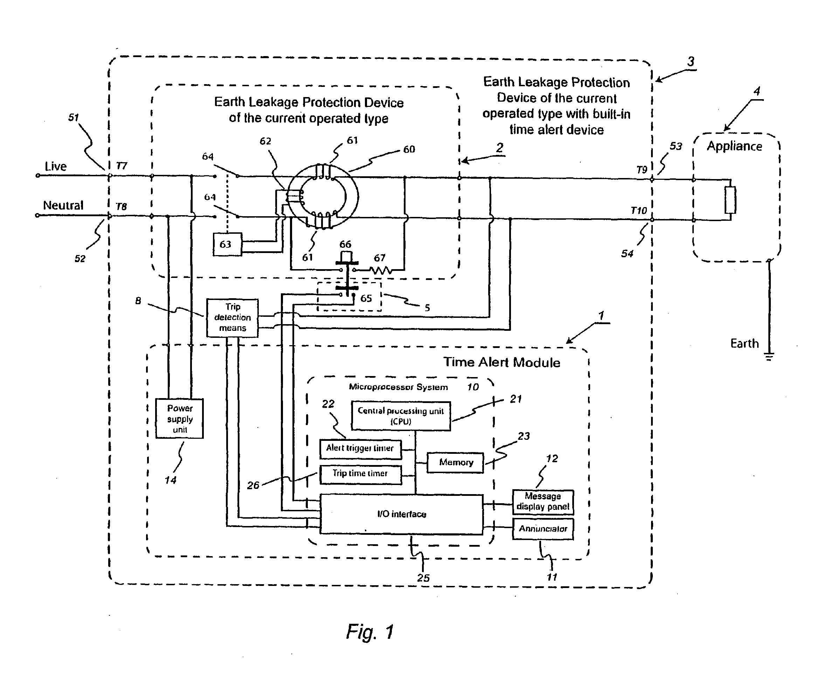

Referring to Fig. 1, the earth leakage protection device with built-in time alert feature (3) of this invention comprises a commercially available earth leakage protection device (2) with a test switch (66), a time alert module (1), a test detection means (5) and a trip detection means (8).

The earth leakage protection device on which the features of this invention is to be incorporated can be any commercially available earth leakage protection device. For the purpose of explaining the features of the present invention, a typical earth leakage protection device (2) of the current operated type is chosen. The earth leakage protection device (2) has a toroidal transformer (60), primary windings (61), a sensing coil (62) which is the secondary winding, a tripping mechanism (63) which include tripping control circuitry, trip coil and latch, breaking contacts (64) and a test switch (66), with one end connected to the load side of the live line of earth leakage protection device (2) via a current limiting device (67) and the other end connected to the neutral of the supply end of earth leakage protection device (2). The current limiting device (67) can be a resistor, the value of the resistor being determined by the sensitivity of the earth leakage protection device (2).

The time alert module comprises a microprocessor system (10), an annunciator (11), an optional message display panel (12) and a power supply unit (14) supplying power to the time alert module (1).

The microprocessor system (10) of the time alert module (1) comprises a central processing unit (CPU) (21), a memory (23), volatile and non-volatile, an alert trigger timer (22), an optional trip time timer (26), and an I/O interface (25). The CPU (21) is the brain of the microprocessor system (10) and executes pre-programmed instructions residing in the memory (23) for the proper functioning of the time alert module (1). The alert trigger timer (22) and the optional trip time timer (26) are software controlled timers with their timing and logic controlled by the CPU (21) of the microprocessor system (10).

The annunciator (11) is electrically connected to the microprocessor system (10) through I/O interface (25) of the microprocessor system (10) to allow the microprocessor system (10) to control the turning on and turning off of the visible and audible alerting signals. The annunciator (11) consists of at least a speaker or buzzer or other forms of devices capable of generating an audible warning sound or voice and/or a visual indicator to alert the user to perform an integrity test on the earth leakage protection device (2) as and when the alert trigger timer (22) has timed-out.

The message display panel (12) can be optionally provided and when provided it is interfaced to the microprocessor system (10) via the I/O interface (25) to allow the microprocessor system (10) to display written instructions to the user of the earth leakage protection device (2) on the actions to be taken. The message display panel (12) is capable of displaying static or scrolling messages. These messages include instructions to the users of the earth leakage protection device (2) on the purpose of the annunciations and the actions needed from the user. In the case of a failed test, the message could advise the user accordingly and ask the user to seek expert assistance. These messages are pre-defined and pre-stored in the memory (23) of microprocessor system (10).

The said time alert module (1) is powered by a power supply unit (14). In operation, the power supply unit (14) is electrically connected to input terminals T7 and T8 (51 and 52) of the earth leakage protection device to receive the requisite AC power supply. The power supply unit (14) is also provided with an internal DC battery supply (not shown) which serves as a backup in the event that the AC electricity supply is cut off.

The test detection means (5) is a device or circuit that is mechanically or electrically interlocked or both mechanically and electrically interlocked to the test switch (66) of the earth leakage protection device (2) to enable the microprocessor system (10) determines that the user has performed an integrity test on the earth leakage protection device (2). One embodiment of the test detection means (5) as shown in Fig. 1 is a test detection switch (65) mechanically interlocked to the test switch (66) so that when the test switch (66) is pressed, the test detection switch (65) changes in state. The ends of the test detection switch (65) are electrically interfaced to the microprocessor system (10) via the I/O interface (25). When the microprocessor system (10) detects a change in the state of the test detection switch (65), the microprocessor system (10) determines that the user has performed an integrity test on the earth leakage protection device (2) and the microprocessor system (10) will in turn determine if the integrity test is successful. Certain predetermining conditions must be satisfied for the microprocessor system (10) of the time alert module (1) to recognize the test as being successful. These predetermining conditions shall be described latter. If the integrity test is successful, the microprocessor system (10) re-starts or resets the alert trigger timer (22). If the integrity test fails, the audiovisual alerts from the annunciator (11) continue and the alert trigger timer (22) will not be reset. Where the time alert module (1) is optionally provided with a message display panel (12), the CPU (21) of the microprocessor system (10) shall, in a failed test, causes a pre-stored message in the memory (23) to be sent to the message display panel (12) via the I/O interface (25) of the microprocessor system (10) advising the user of a failed integrity test and that expert attention on the earth leakage protection device (2) is needed immediately.

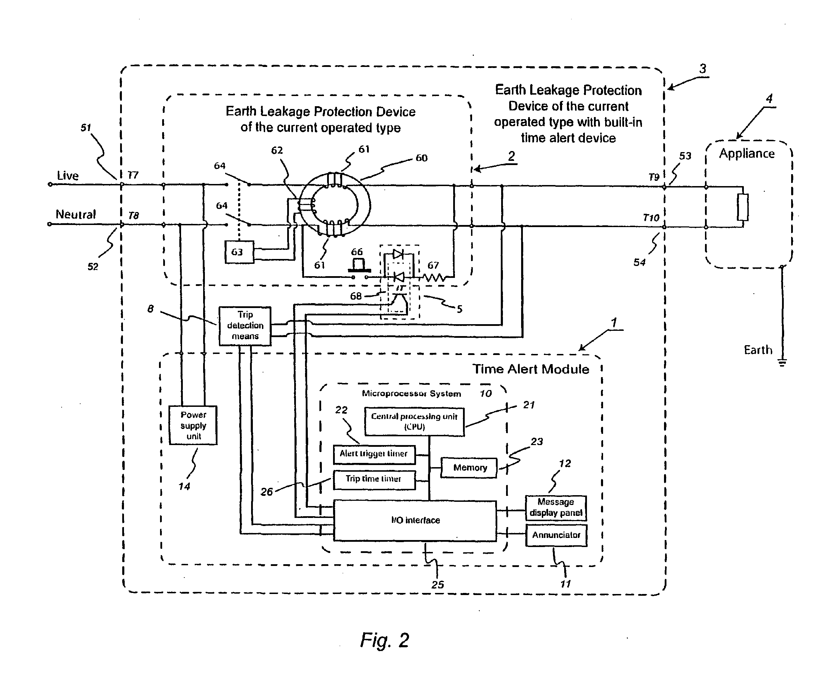

Referring to Fig. 2, the test detection means (5) can alternatively be an opto coupler electrically interlocked to the test switch (66). In this embodiment, the opto-coupler (68) is connected in series with the current limiting device (67) and the output of the opto-coupler (68) is interfaced to the I/O interface (25) of the microprocessor system (10). The closing of the test switch (66) will intentionally generate a leakage current through the current limiting device (67) to the neutral of the supply side of the incoming supply and this current flow will also activate the opto-coupler (68), resulting in a change in state of the output of the opto-coupler (68) as detected by the microprocessor system (10). As yet another embodiment, it should be noted that the opto-coupler can be replaced with a solid-state relay to provide a test detection means (5) that is also electrically interlocked with the test switch (66).

While the above describes the use of microprocessor system in implementing the invention, it is readily understood by someone skilled in the art that the above logic and control sequence can also be achieved through discrete logic circuits and/or analogue circuits and on any conventional earth leakage protection device which may differs in configuration from that illustrated here.

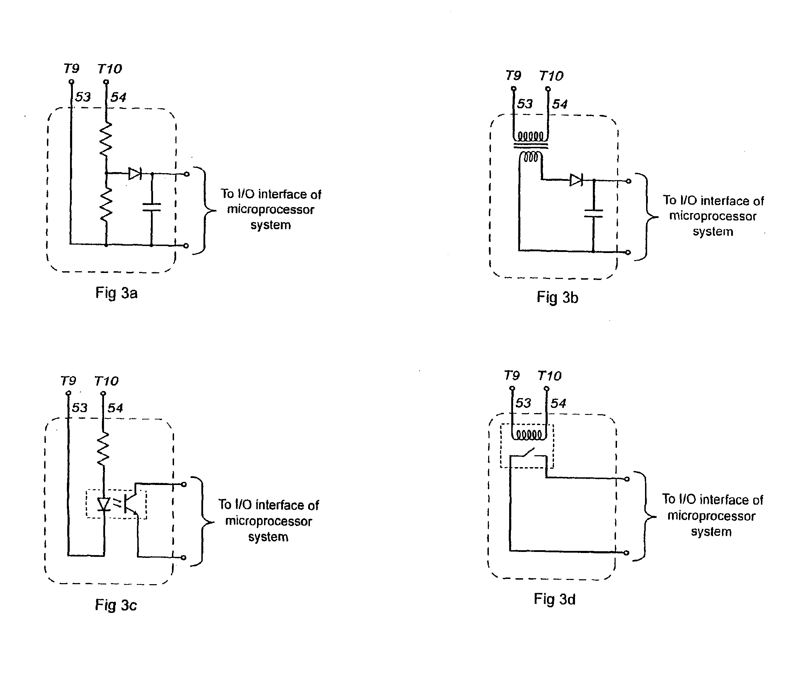

Figs. 3a to 3d illustrate some of the possible configurations of a voltage sensor. Fig. 3a shows a potential divider circuit with the input connected to the supply lines and the output interfaced to the microprocessor system (10) via the I/O interface (25). Fig. 3b shows a step down voltage transformer with the input connected to the supply lines and the output interfaced to the microprocessor system (10) via the I/O interface (25). Fig. 3c shows an optically isolated switch or a solid-state relay with the input connected to the supply lines and the output interfaced to the microprocessor system (10) via the I/O interface (25). Fig. 3d shows an AC electromechanical relay with the input connected to the supply lines and with the said relay having a pair of contacts interfaced to the microprocessor system (10) via the I/O interface (25), wherein the closing or opening of the contacts is determined by whether there exists a voltage across the input terminals.

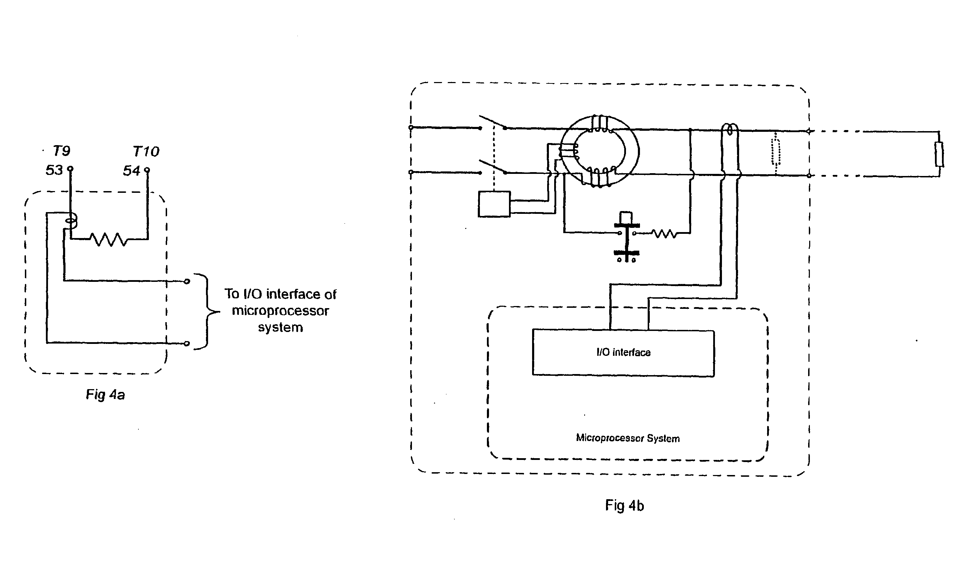

Fig. 4a shows one possible configuration of a current sensor wherein a current transformer monitors the current flowing through a shunt resistor connected across the output terminals T9 and T10 (53 and 54) of the earth leakage protection device (2) with time alert feature, the output of the current transformer being interfaced to the microprocessor system (10) via the I/O interface (25) to detect the interruption to current flowing through the shunt resistor. Fig. 4b shows a current sensor in the form of a current transformer monitoring current flowing in the live or neutral line on the load side of the earth leakage protection device (2) with time alert feature which is the same as the current that flows through the shunt resistor in a no load condition and a higher value under load.

The operation of the earth leakage protection device (2) will now be explained with reference to Figs. 1, 5 and 6 and with the test detection switch (65) as the test detection means (5).

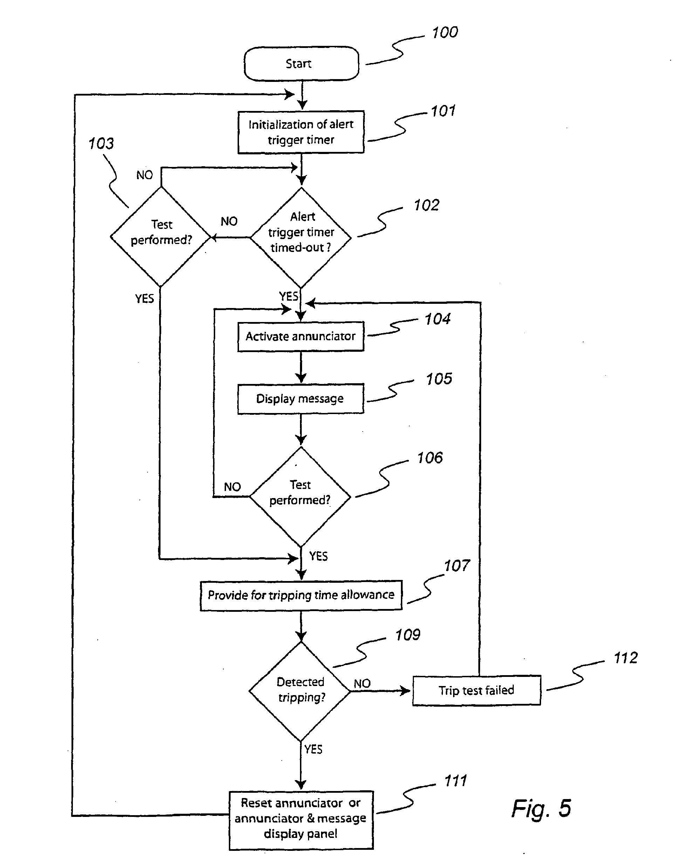

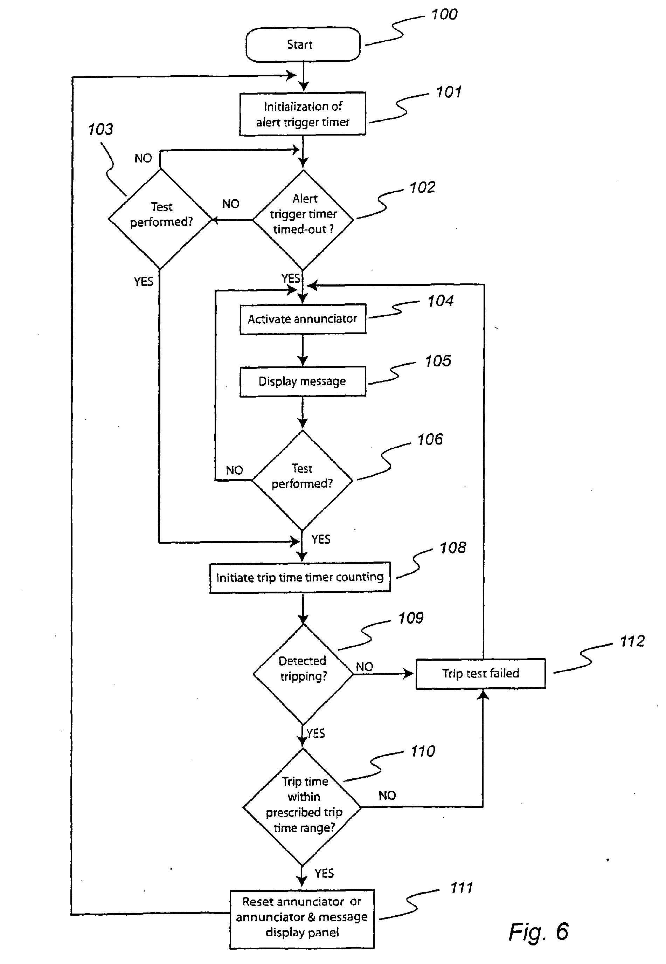

Initially, when the said time alert module (1) is energized (step 100 of Fig. 5 or 6) the alert trigger timer (22) of the microprocessor system (10) is reset to the initial condition for commencement of time counting (step 101). The said alert trigger timer (22) will continue counting even if the AC electricity supply at the live and neutral is interrupted because it will be powered by the internal DC battery supply if the external AC electricity supply is interrupted. When the alert trigger timer (22) timed-out (step 102) after a preset time, the microprocessor system (10) initiate visual and audio reminders to the user through the annunciator (11) (step 104) reminding the user to perform an integrity test on the said earth leakage protection device (2). The audio and visual reminders may include a flashing indicator, a short intermittent beeping sound, a voice message to inform the user on the purpose of the audio annunciation and the action that must be performed by the user or a combination of these reminders. In the case of a time alert module (1) provided with the optional message display panel (12), a pre-stored message will be sent simultaneously by the microprocessor system (10) via the I/O interface (25) to the message display panel (12) to display the purpose of the reminders and the action that must be taken by the user (step 105). With this dual-indication mean even the deaf or visually handicapped users are alerted. Step 105 will be skipped in the case of time alert module not provided with the optional message display panel (12).

To perform an integrity test on the said earth leakage protection device (2), the user presses the test switch (66) and as described earlier, this causes the test detection switch (65) to change state as the switches are interlocked together. As the ends of the test detection switch (65) are connected to the I/O interface of the microprocessor system (10), the microprocessor system (10) detects a change in state of the test detection switch (65), indicating that the user has performed an integrity test on the said earth leakage protection device (2) (step 106). At the same time, the closing of the test switch (66) generates an earth leakage condition, triggering the earth leakage protection device (2) to trip if the sensing coil (62) and the tripping mechanism (63) of the earth leakage protection device (2) are functioning, thus interrupting the AC electricity supply. A malfunctioned earth leakage protection device (2) will fail to interrupt the AC electricity supply. The microprocessor system (10) of the time alert module (1), on detecting the performance of the integrity test (step 106), will reset the alert trigger timer (22) if the integrity test is successful. In the case of a time alert module (1) provided with the alert trigger timer (22) but not the trip time timer (26) (Fig. 5), one predetermining condition must be satisfied for a time alert module (1) to recognize that the integrity test as being successfully completed. The predetermining condition is the detection by the time alert module (1) of an interruption in the AC electricity supply (step 109) after a preset time delay (step 107 Fig. 5) from the detection of the closure of the test detection switch (step 106). The preset time delay (step 107) should be at least the longest of the prescribed tripping time range of the earth leakage protection device (2) and this preset time delay is provided to avoid the microprocessor system (10) testing the output of the trip detection means (8) before the tripping of the earth leakage protection device (2). Otherwise, if the microprocessor system (10) tests the trip detection means (8) before the lapse of the preset time delay, the microprocessor system (10) would erroneously interpret that the earth leakage protection device (2) fails to trip. After the lapse of the preset time delay, the microprocessor system (10) tests the output of the trip detection means (8) to determine if the earth leakage protection device (2) has tripped and interrupted the AC supply, the said output of the trip detection means (8) being interfaced via I/O interface (25) to the microprocessor system (10). The trip detection means (8) could be a voltage senor or a current sensor or other means such as the auxiliary contact to the breaking contacts of the earth leakage protection device (2) or an additional pole of the earth leakage protection device (2). If the load coupled to the earth leakage protective device (2) is inductive load, the voltage or current may take time to decay after interruption of the electricity supply. As a result, if the trip detection means (8) used is a voltage sensor or a current sensor, the voltage sensor or the current sensor will continue to see a voltage or current respectively immediately after tripping of the earth leakage protection device (2). For the measurement of tripping time, the method of which shall be described later, this post a problem to the accuracy of the tripping time measured. To ensure the tripping time is accurate enough, on actuation of the test switch (66), a test voltage (for a voltage sensor) or a test current (for a current sensor) of 85% or below the test voltage or test current respectively before actuation of the test switch (66) is interpreted as that the earth leakage protection device (2) has tripped.

In the case of a time alert module (1) provided with an alert trigger timer (22) and a trip time timer (26) (Fig. 6), two predetermining conditions must be satisfied for a time alert module (1) to recognize that the integrity test as being successfully completed. These predetermining conditions include the predetermining condition described earlier and a second predetermining condition. The second predetermining condition is that the trip time of the earth leakage protection device (2) as measured by the time alert module (1) must be within a prescribed tripping time range (Step 110) typically 30 ms to 200 ms, depending on the sensitivity of the earth leakage protection device (2) and the leakage current. The measurement of the trip time of the earth leakage protection device (2) will now be described. The pressing of the test switch (66) causes the test detection switch (65) to change state. As the ends of the test detection switch (65) are interfaced to the I/O interface of the microprocessor system (10) and on detection of this change in state of the test detection switch (65), the CPU (21) of the microprocessor system (10) initiates time counting by the trip time timer (26). The microprocessor system (10) continuously monitors the output of the trip detection means (8) for a confirmation of the tripping of the earth leakage protection device (2), the said output of trip detection means (8) being interfaced via I/O interface (25) to the microprocessor system (10). The necessary indication for a confirmation of the tripping of the earth leakage protection device depends on the type of trip detection means (8) adopted. As described earlier, if the trip detection means (8) is a voltage sensor or a current sensor, a test voltage or a test current respectively of 85% or less compared to the test voltage or current before actuation of the test switch (66) would be interpreted as that the earth leakage protection device (2) has tripped. If the trip detection means (8) is an auxiliary contact to the breaking contacts (64) of the earth leakage protection device (2) or an additional pole of the earth leakage protection device (2), a detection of the change of state of the auxiliary contact or additional pole by the microprocessor system (10) would be interpreted as that the earth leakage protection device (2) has tripped. It is obvious that when the trip detection means (8) is the auxiliary contact to the breaking contacts of the earth leakage protection device (2) or the additional pole of the earth leakage protection device (2), the trip time measurement is the most accurate. Upon detection of the tripping of the earth leakage protection device (2), the CPU (21) of the microprocessor system (10) immediately halts time counting by the trip time timer (26). The trip time as measured by the trip time timer (26) is compared against the prescribed tripping time range of the earth leakage protection device as stored in the memory (23) of the microprocessor system (10) to determine if the earth leakage protection device (2) breaks within the prescribed tripping time range for that particular made or model.

Once these predetermining conditions are met, the annunciator (11) and the message display panel (12) (if one is provided) are reset (step 111 Figs 5 and 6) and the alert trigger timer (22) in the microprocessor system (10) is reset or initialized again for the next test time (step 10).

In the case of a time alert module (1) with only the alert trigger timer (22), if the microprocessor system (10) detects only the closure of the test detection switch (65) but not a confirmation of the tripping of the earth leakage protection device (2), it interprets this condition as a failed test (Step 112 Fig. 5) and the said earth leakage protection device (2) is deemed faulty.

In the case of a time alert module (1) provided with both the alert trigger timer (22) and the trip time timer (26), all the two predetermining conditions must be met or else the microprocessor system (10) interprets the test as a failed test (Step 112 Fig. 6) and the said earth leakage protection device (2) is deemed faulty..

In the event of a failed test, the audiovisual alerts from the annunciator (11) continue and the alert trigger timer (22) will not be reset. Where the time alert module (1) is optionally provided with a message display panel (12), the CPU (21) of the microprocessor system (10) shall, in a failed test, causes a pre-stored message in the memory (23) to be sent to the message display panel (12) via the I/O interface (25) of the microprocessor system (10) advising the user of a failed integrity test and that expert attention on the earth leakage protection device (2) is needed immediately.

In another situation, if the microprocessor system (10) detects an AC electricity supply interruption without the activation of the test detection switch (65), it interprets this condition as a normal power failure thus maintaining the present state of the system and no annunciation would be triggered.

In yet another situation, if the microprocessor system (10) detects an absence of voltage across the supply lines connected to the output of the earth leakage protection device (2) before actuation of the test switch (66), it ignores the test and in the case where a message display panel (12) is provided, a message could be displayed to advise the user that the test is ineffective as there is no power on the supply line.

The user of the earth leakage protection device (2) may perform an integrity test on the earth leakage protection device (2) any time before the alert trigger timer (22) timed-out by pressing the test switch (66) (step 103). The pressing the test switch (66) simultaneously closes the test detection switch (65) as described above. Once the microprocessor system (10) detects the closure of test detection switch (65), the microprocessor system (10) continuously monitors the output of the trip detection means (8) to determine the satisfaction of the predetermining condition described earlier and, as is appropriate, for the satisfaction of the second predetermining condition, before resetting the alert trigger timer (22). In the case of a failed test, the CPU (21) triggers an audiovisual alert by the annunciator (11). Where the time alert module (1) is optionally provided with a message display panel (12), the CPU (21) of the microprocessor system (10) shall, in a failed test, causes a pre-stored message in the memory (23) to be sent to the message display panel (12) via the I/O interface (25) of the microprocessor system (10) advising the user of a failed integrity test and that expert attention on the earth leakage protection device of current operated type (2) is needed immediately.

In actual application, the earth leakage protection device (2) of Figs. 1 or 2 is packaged with a casing and is mountable in the same manner as that of a conventional earth leakage protection device.

Although only a few exemplary embodiments of the present invention have been described in detail above, those skilled in the art will readily appreciate that many modifications are possible in the exemplary embodiments above without materially departing from the novel teachings of this invention. In particular, the earth leakage protection device may be any of the commercially available earth leakage protection devices. For instance, the earth leakage protection device may be of voltage operated type instead of current operated type. Accordingly, all such modifications are intended to be included within the scope of this invention as defined in the following claims or equivalent thereof.

## Claims

1. An earth leakage protection device (2) with a built-in time alert feature comprising an earth leakage protection device complete with a test switch (66) wherein the earth leakage protection device is provided with a built-in time alert module (1), a test detection means (5) to detect the performance of an integrity test by the user and a trip detection means (8) to detect tripping of the earth leakage protection device, wherein the time alert module (1) comprises:
a microprocessor system (10) comprising a CPU (21), a memory (23), an alert trigger timer (22) and
an I/O interface (25),
at least one annunciator (11) electrically connected to the I/O interface (25) of the
microprocessor system, and
a power supply unit (14) connected to the input terminals of the earth leakage
protection device, providing power to the time alert module (1);
wherein the trip detection means is electrically connected to the output terminals of the
earth leakage protection device (2) with the output of the trip detection means interfaced to the microprocessor system (10) of the time alert module (1) through the I/O interface (25); and
wherein the test detection means (5) electrically interfaced to the microprocessor system (10) of
the time alert module (1) through the I/O interface (25) to enable the microprocessor system of the time alert module to detect the performance of an integrity test by a user.

2. An earth leakage protection device with built-in time alert feature as in claim 1, wherein the microprocessor system of the time alert module further comprising a trip time timer.

3. An earth leakage protection device with built-in time alert feature as in claim 1 or 2, wherein the annunciator is triggered by the CPU of the microprocessor system upon the time out of the alert trigger timer to alert the user of the earth leakage protection device to perform an integrity test on the earth leakage protection device, the annunciator being triggered at a preset time interval stored in the memory of the microprocessor system of the time alert module.

4. An earth leakage protection device with built-in time alert feature as in claim 1 or 2, wherein the annunciator of the built-in time alert module is an audible device and/or an indicator light.

5. An earth leakage protection device with built-in time alert feature as in claim 1, wherein when a user performs an integrity test on the earth leakage protection device, the alert trigger timer resets only if the trip detection means detects the successful tripping of the earth leakage protection device.

6. An earth leakage protection device with built-in time alert feature as in claim 2, wherein when a user performs an integrity test on the earth leakage protection device, the alert trigger timer resets only if the trip detection means detects the successful tripping of the earth leakage protection device and only if the trip time of the earth leakage protection device, as measured by the trip time timer of the time alert module, is within a prescribed tripping time range.

7. An earth leakage protection device with built-in time alert feature as in claim 1 or 2, wherein the earth leakage protection device is provided with an auxiliary contact to the breaking contacts and wherein the trip detection means is the auxiliary contact to breaking contacts of the earth leakage protection device.

8. An earth leakage protection device with built-in time alert feature as in claim 1 or 2, wherein the earth leakage protection device is provided with an additional pole and wherein the trip detection means is the additional pole of the earth leakage protection device.

9. An earth leakage protection device with built-in time alert feature as in claim 1 or 2, wherein the trip detection means is a voltage sensor or a current sensor.

10. An earth leakage protection device with built-in time alert feature as in claim 1 or 2, wherein the test detection means is a test detection switch mechanically interlocked to the test switch of the earth leakage protection device and with the ends of the test detection switch interfaced with the microprocessor system of the time alert module via the I/O interface.

11. An earth leakage protection device with built-in time alert feature as in claim 1 or 2, wherein the test detection means is an opto-coupler or a solid-state relay electrically interlocked to the test switch of the earth leakage protection device and with the outputs of the opto-coupler or the solid-state relay interfaced with the microprocessor system of the time alert module via the I/O interface.

12. An earth leakage protection device with built-in time alert feature comprising an earth leakage protection device with a built-in time alert module as in claims 1 or 2, wherein the time alert module is further provided with a message display panel which is electrically interfaced to the microprocessor system via the I/O interface of the microprocessor system to allow the microprocessor system to display pre-defined message stored in the memory of the microprocessor system, with the message displaying the cause of the reminder and the action that must be performed by the user of the earth leakage detection device when the annunciator is triggered on time-out of the alert trigger timer of the microprocessor system.

## Patentansprüche

1. Erdschlussschutzeinrichtung (2) mit einem eingebauten Zeitwarnelement, die eine Erdschlussschutzeinrichtung komplett mit einem Prüfschalter (66) umfasst, wobei die Erdschlussschutzeinrichtung mit einem eingebauten Zeitwarnmodul (1), einem Prüfungserkennungsmittel (5) zum Erfassen des Durchführens einer Unversehrtheitsprüfung durch den Benutzer und einem Auslöseerkennungsmittel (8) zum Erkennen des Auslösens der Erdschlussschutzeinrichtung ausgestattet ist, wobei das Zeitwarnmodul (1) Folgendes umfasst:
ein Mikroprozessorsystem (10), das eine CPU (21), einen Speicher (23), einen Alarmauslösetimer (22) und eine E/A-Schnittstelle (25) umfasst,
mindestens einen Alarmgeber (11), der elektrisch mit der E/A-Schnittstelle (25) des Mikroprozessorsystems verbunden ist, und
einer Stromversorgungseinheit (14), die mit den Eingangsanschlüssen der Erdschlussschutzeinrichtung verbunden ist und das Zeitwarnmodul (1) mit Strom versorgt;
wobei das Auslöseerkennungsmittel elektrisch mit den Ausgangsanschlüssen der Erdschlussschutzeinrichtung (2) verbunden ist, wobei der Ausgang des Auslöseerkennungsmittels über die E/A-Schnittstelle (25) an das Mikroprozessorsystem (10) des Zeitwarnmoduls (1) angeschlossen ist; und
wobei das Prüfungserkennungsmittel (5) über die E/A-Schnittstelle (25) elektrisch an das Mikroprozessorsystem (10) des Zeitwarnmoduls (1) angeschlossen ist, damit das Mikroprozessorsystem des Zeitwarnmoduls die Durchführung einer Unversehrtheitsprüfung durch einen Benutzer erkennt.

2. Erdschlussschutzeinrichtung mit eingebautem Zeitwarnelement nach Anspruch 1, wobei das Mikroprozessorsystem des Zeitwarnmoduls ferner einen Auslösezeittimer umfasst.

3. Erdschlussschutzeinrichtung mit eingebautem Zeitwarnelement nach Anspruch 1 oder 2, wobei der Alarmgeber von der CPU des Mikroprozessors beim Überschreiten der Zeit des Alarmauslösetimers ausgelöst wird, um den Benutzer der Erdschlussschutzeinrichtung daran zu erinnern, die Unversehrtheit der Erdschlussschutzeinrichtung zu prüfen, wobei der Alarmgeber in einem festgelegten Zeitintervall, das im Speicher des Mikroprozessorsystems des Zeitwarnmoduls gespeichert ist, ausgelöst wird.

4. Erdschlussschutzeinrichtung mit eingebautem Zeitwarnelement nach Anspruch 1 oder 2, wobei der Alarmgeber des eingebauten Zeitwarnmoduls eine akustische Einrichtung und/oder ein Leuchtmelder ist.

5. Erdschlussschutzeinrichtung mit eingebautem Zeitwarnelement nach Anspruch 1, wobei wenn ein Benutzer die Unversehrtheit der Erdschlussschutzeinrichtung prüft, der Alarmauslösetimer nur dann zurücksetzt, wenn das Auslöseerkennungsmittel das erfolgreiche Auslösen der Erdschlussschutzeinrichtung erkennt.

6. Erdschlussschutzeinrichtung mit eingebautem Zeitwarnelement nach Anspruch 2, wobei wenn ein Benutzer die Unversehrtheit der Erdschlussschutzeinrichtung prüft, der Alarmauslösetimer der Alarmauslösetimer nur dann zurücksetzt, wenn das Auslöseerkennungsmittel das erfolgreiche Auslösen der Erdschlussschutzeinrichtung erkennt und nur dann, wenn die von dem Auslösezeittimer des Zeitwarnmoduls gemessene Auslösezeit der Erdschlussschutzeinrichtung innerhalb einer vorgeschriebenen Auslösezeitspanne liegt.

7. Erdschlussschutzeinrichtung mit eingebautem Zeitwarnelement nach Anspruch 1 oder 2, wobei die Erdschlussschutzeinrichtung mit einem Zusatzkontakt zu den Ruhekontakten ausgestattet ist und wobei das Auslöseerkennungsmittel der Zusatzkontakt zu den Ruhekontakten der Erdschlussschutzeinrichtung ist.

8. Erdschlussschutzeinrichtung mit eingebautem Zeitwarnelement nach Anspruch 1 oder 2, wobei die Erdschlussschutzeinrichtung mit einem Zusatzpol ausgestattet ist und wobei das Auslöseerkennungsmittel der Zusatzpol der Erdschlussschutzeinrichtung ist.

9. Erdschlussschutzeinrichtung mit eingebautem Zeitwarnelement nach Anspruch 1 oder 2, wobei das Auslöseerkennungsmittel ein Spannungsfühler oder Stromfühler ist.

10. Erdschlussschutzeinrichtung mit eingebautem Zeitwarnelement nach Anspruch 1 oder 2, wobei das Prüfungserkennungsmittel ein Prüfungserkennungsschalter ist, der mechanisch mit dem Prüfschalter der Erdschlussschutzeinrichtung verbunden ist, und wobei die Enden des Prüfungserkennungsschalters über die E/A-Schnittstelle an das Mikroprozessorsystem des Zeitwarnmoduls angeschlossen sind.

11. Erdschlussschutzeinrichtung mit eingebautem Zeitwarnelement nach Anspruch 1 oder 2, wobei das Prüfungserkennungsmittel ein Optokoppler oder ein Festkörperrelais ist, der oder das elektrisch mit dem Prüfschalter der Erdschlussschutzeinrichtung verbunden ist und wobei die Ausgänge des Optokopplers oder des Festkörperrelais über die E/A-Schnittstelle an das Mikroprozessorsystem des Zeitwarnmoduls angeschlossen sind.

12. Erdschlussschutzeinrichtung mit eingebautem Zeitwarnelement, die eine Erdschlussschutzeinrichtung mit einem eingebauten Zeitwarnmodul nach Anspruch 1 oder 2 umfasst, wobei das Zeitwarnmodul ferner mit einem Anzeigefeld für Meldungen ausgestattet ist, das elektrisch über die E/A-Schnittstelle des Mikroprozessorsystems an das Mikroprozessorsystem angeschlossen ist, damit das Mikroprozessorsystem eine vorher festgelegte Meldung, die im Speicher des Mikroprozessorsystems gespeichert ist, anzeigen kann, wobei die Meldung den Grund der Erinnerung angibt und die Maßnahme, die der Benutzer der Erdschlussschutzeinrichtung ergreifen muss, wenn der Alarmgeber beim Überschreiten der Zeit des Alarmauslösetimers des Mikroprozessorsystems ausgelöst wird.

## Revendications

1. Dispositif de protection contre une fuite à la terre (2) intégrant une alarme temporisée comprenant un dispositif de protection contre une fuite à la terre avec un commutateur de test (66), le dispositif de protection contre une fuite à la terre comportant un module d'alarme temporisée intégré (1), un moyen de détection de test (5) pour détecter la réalisation d'un test d'intégrité par l'utilisateur et un moyen de détection de déclenchement (8) pour détecter un déclenchement du dispositif de protection contre une fuite à la terre, le module d'alarme temporisée (1) comprenant :
- un système microprocesseur (10) comprenant une unité centrale (CPU) (21), une mémoire (23), un temporisateur de déclenchement d'alarme (22) et une interface d'entrée/sortie (25),
- au moins un moyen de signalisation (11) connecté électriquement à l'interface d'entrée/sortie (25) du système microprocesseur, et
- une unité d'alimentation électrique (14) connectée aux bornes d'entrée du dispositif de protection contre une fuite à la terre, alimentant en électricité le module d'alarme temporisée (1) ;
le moyen de détection de déclenchement étant connecté électriquement aux bornes de sortie du dispositif de protection contre une fuite à la terre (2) avec la sortie du moyen de détection de déclenchement connectée au système microprocesseur (10) du module d'alarme temporisée (1) par l'intermédiaire de l'interface d'entrée/sortie (25) ; et
le moyen de détection de test (5) étant connecté électriquement au système microprocesseur (10) du module d'alarme temporisée (1) à travers l'interface d'entrée/sortie (25) pour permettre au système microprocesseur du module d'alarme temporisée de détecter la réalisation d'un test d'intégrité par un utilisateur.

2. Dispositif de protection contre une fuite à la terre intégrant une alarme temporisée selon la revendication 1, dans lequel le système microprocesseur du module d'alarme temporisée comprend en outre un temporisateur de temps de déclenchement.

3. Dispositif de protection contre une fuite à la terre intégrant une alarme temporisée selon la revendication 1 ou la revendication 2, dans lequel le moyen de signalisation est déclenché par l'unité centrale du système microprocesseur lors de la temporisation du temporisateur de déclenchement d'alarme pour alerter l'utilisateur du fait que le dispositif de protection contre une fuite à la terre réalise un test d'intégrité sur le dispositif de protection contre une fuite à la terre, le moyen de signalisation étant déclenché à un intervalle de temps préétabli stocké dans la mémoire du système microprocesseur du module d'alarme temporisée.

4. Dispositif de protection contre une fuite à la terre intégrant une alarme temporisée selon la revendication 1 ou la revendication 2, dans lequel le moyen de signalisation du module d'alarme temporisée intégré est un dispositif audible et/ou un indicateur lumineux.

5. Dispositif de protection contre une fuite à la terre intégrant une alarme temporisée selon la revendication 1, dans lequel, lorsqu'un utilisateur réalise un test d'intégrité sur le dispositif de protection contre une fuite à la terre, le temporisateur de déclenchement d'alarme est remis à zéro uniquement si le moyen de détection de déclenchement détecte le déclenchement avec succès du dispositif de protection contre une fuite à la terre.

6. Dispositif de protection contre une fuite à la terre intégrant une alarme temporisée selon la revendication 2, dans lequel, lorsqu'un utilisateur réalise un test d'intégrité sur le dispositif de protection contre une fuite à la terre, le temporisateur de déclenchement d'alarme est remis à zéro uniquement si le moyen de détection de déclenchement détecte le déclenchement avec succès du dispositif de protection contre une fuite à la terre et uniquement si le temps de déclenchement du dispositif de protection contre une fuite à la terre, tel que mesuré par le temporisateur de temps de déclenchement du module d'alarme temporisée, est compris dans une plage de temps de déclenchement prescrite.

7. Dispositif de protection contre une fuite à la terre intégrant une alarme temporisée selon la revendication 1 ou la revendication 2, dans lequel le dispositif de protection contre une fuite à la terre comporte un contact auxiliaire sur les contacts de coupure et le moyen de détection de déclenchement est le contact auxiliaire sur les contacts de coupure du dispositif de protection contre une fuite à la terre.

8. Dispositif de protection contre une fuite à la terre intégrant une alarme temporisée selon la revendication 1 ou la revendication 2, dans lequel le dispositif de protection contre une fuite à la terre comporte un pôle additionnel et le moyen de détection de déclenchement est le pôle additionnel du dispositif de protection contre une fuite à la terre.

9. Dispositif de protection contre une fuite à la terre intégrant une alarme temporisée selon la revendication 1 ou la revendication 2, dans lequel le moyen de détection de déclenchement est un capteur de tension ou un capteur de courant.

10. Dispositif de protection contre une fuite à la terre intégrant une alarme temporisée selon la revendication 1 ou la revendication 2, dans lequel le moyen de détection de test est un commutateur de détection de test verrouillé mécaniquement avec le commutateur de test du dispositif de protection contre une fuite à la terre et les extrémités du commutateur de détection de test étant connectées au système microprocesseur du module d'alarme temporisée par l'intermédiaire de l'interface d'entrée/sortie.

11. Dispositif de protection contre une fuite à la terre intégrant une alarme temporisée selon la revendication 1 ou la revendication 2, dans lequel le moyen de détection de test est un optocoupleur ou un relais à semi-conducteurs verrouillé électriquement avec le commutateur de test du dispositif de protection contre une fuite à la terre et les sorties de l'optocoupleur ou du relais à semi-conducteurs étant connectées au système microprocesseur du module d'alarme temporisée par l'intermédiaire de l'interface d'entrée/sortie.

12. Dispositif de protection contre une fuite à la terre intégrant une alarme temporisée comprenant un dispositif de protection contre une fuite à la terre intégrant un module d'alarme temporisée selon la revendication 1 ou la revendication 2, le module d'alarme temporisée comportant en outre un panneau d'affichage de message qui est connecté électriquement au système microprocesseur par l'intermédiaire de l'interface d'entrée/sortie du système microprocesseur pour permettre au système microprocesseur d'afficher un message prédéfini stocké dans la mémoire du système microprocesseur, le message affichant la cause du rappel et l'action qui doit être réalisée par l'utilisateur du dispositif de protection contre une fuite à la terre lorsque le moyen de signalisation est déclenché lors de la temporisation du temporisateur de déclenchement d'alarme du système microprocesseur.
